(19) **Europäisches Patentamt European Patent Office Office européen des brevets**

(11) **EP 4 149 744 B1**

(12) **FASCICULE DE BREVET EUROPEEN**

(45) Date de publication et mention de la délivrance du brevet:
**06.08.2025 Bulletin 2025/32**

(21) Numéro de dépôt: **21731243.8**

(22) Date de dépôt: **11.05.2021**

(51) Classification Internationale des Brevets (IPC):
**B22F 10/28** *(2021.01)* **B22F 10/36** *(2021.01)*
**B22F 10/366** *(2021.01)* **B22F 12/49** *(2021.01)*
**B29C 64/153** *(2017.01)* **B33Y 10/00** *(2015.01)*
**B33Y 30/00** *(2015.01)* **B33Y 50/02** *(2015.01)*

(52) Classification Coopérative des Brevets (CPC):
**B33Y 10/00; B22F 10/28; B22F 10/36; B22F 10/366; B22F 12/49; B29C 64/153; B33Y 30/00; B33Y 50/02;** Y02P 10/25

(86) Numéro de dépôt international:
**PCT/FR2021/050807**

(87) Numéro de publication internationale:
**WO 2021/229172 (18.11.2021 Gazette 2021/46)**

(54) **PROCÉDÉ ET DISPOSITIF DE FABRICATION ADDITIVE D'UN OBJET À PARTIR D'UNE COUCHE DE POUDRE**

VERFAHREN UND VORRICHTUNG ZUR ADDITIVEN HERSTELLUNG EINES BAUTEILS AUS EINER PULVERSCHICHT

PROCESS AND APPARATUS FOR ADDITIVE MANUFACTURING AN OBJECT FROM A POWDER LAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.05.2020 FR 2004677**

(43) Date de publication de la demande:
**22.03.2023 Bulletin 2023/12**

(73) Titulaire: **AddUp**
**63118 Cébazat (FR)**

(72) Inventeurs:
• **DENAVIT, Franck**
  **63118 Cébazat (FR)**
• **BLANCHET, Etienne**
  **63118 Cébazat (FR)**

(74) Mandataire: **Novagraaf Group**
**Chemin de l'Echo 3**
**1213 Onex / Geneva (CH)**

(56) Documents cités:
**WO-A1-2019/207239      DE-A1- 10 112 591**
**DE-A1- 102017 219 184      US-A1- 2018 345 413**
**US-A1- 2019 232 427**

EP 4 149 744 B1

## Description

### DOMAINE DE L'INVENTION

La présente invention concerne un procédé de fabrication additive d'un objet à partir d'une couche de poudre, ainsi qu'un dispositif adapté pour mettre en œuvre un tel procédé.

### ETAT DE LA TECHNIQUE

La fabrication additive consiste à réaliser un objet par fusion de couches de poudre superposées les unes sur les autres. Ces couches correspondent à différentes sections de l'objet à fabriquer.

Pour fusionner une couche de poudre, une source d'énergie projette un faisceau d'énergie sur la surface de cette couche de poudre, en une tache où se produit une telle fusion. Le faisceau d'énergie est ensuite contrôlé de sorte à balayer la surface afin de propager cette fusion sur toute la surface de la couche.

Conventionnellement, le faisceau d'énergie balaye différentes zones de la surface dans une direction longitudinale et selon un sens aller et selon un sens retour, en alternance.

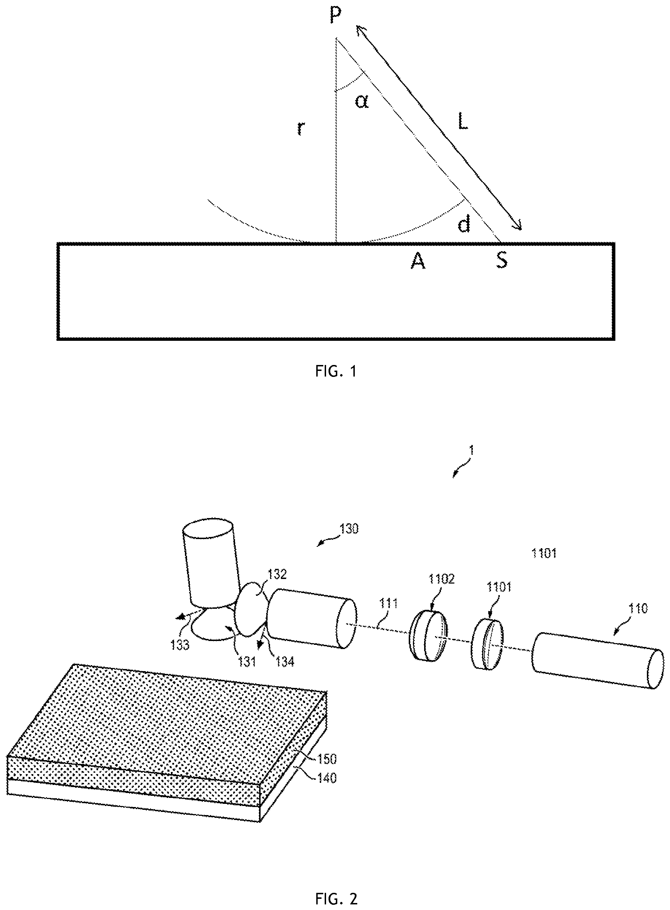

Par ailleurs, il a été proposé, notamment dans le document US2018345413A1 et dans le document DE10112591A1, de piloter la source d'énergie afin que la tache ne parcoure pas la surface selon un mouvement de translation parfaitement rectiligne dans la direction longitudinale, mais selon un mouvement composé d'une translation dans la direction longitudinale et d'un mouvement oscillatoire (« wobbling » en anglais). Le mouvement oscillatoire oscille notamment à haut fréquence et à faible amplitude dans une direction transversale, de manière à élargir le bain de fusion. Le mouvement oscillatoire est typiquement obtenu en orientant le faisceau sur une plage d'angles, à la façon d'un pendule. Il est par ailleurs désirable d'exercer un contrôle fin de la taille de la tache afin d'éviter de trop fortes fluctuations de la quantité d'énergie déposée sur la couche par unité de surface. La taille de la tache dépend de la distance parcourue par le faisceau entre la source d'énergie et la surface, qui elle-même varie en fonction de l'angle d'inclinaison du faisceau par rapport à la surface. Le mouvement oscillatoire contribue donc à faire varier la taille de la tache à haute fréquence. Pour illustrer cela, on a représenté en **figure 1** la trajectoire d'un faisceau d'énergie projetée sur une surface dans un plan perpendiculaire à la direction longitudinale. Sur la figure 1, la direction transversale est horizontale. La trajectoire du faisceau est mobile autour d'un axe parallèle à la direction longitudinale, et passant par un point P fixe. On note :

- S le centre de la tache en lequel le faisceau se projette sur la surface.
- r la distance minimale entre les points P et S.
- $\alpha$ le demi-angle d'oscillation du faisceau.

- L la distance entre le point P et la surface S parcourue par le faisceau incliné selon l'angle $\alpha$.
- A la demi-amplitude d'oscillation du point S sur la surface, dans la direction transversale.

Au cours d'une oscillation, la distance parcourue par le faisceau entre le point P et le point S varie d'un écart de distance *d*. On a :

$$d = L - r = \sqrt{r^2 + A^2} - r$$

La valeur de cet écart d est très faible. A titre d'exemple, pour r=700 mm et A=0,3 mm, on obtient d=0,06 $\mu$m.

Pour conserver une taille de tache parfaitement constante au cours du balayage, il faudrait alors que le focalisateur tienne compte des oscillations, et donc de cet écart de distance d très faible.

### EXPOSE DE L'INVENTION

Un but de l'invention est de pouvoir contrôler finement la quantité d'énergie par unité de surface déposée sur une couche de poudre à l'aide d'un faisceau d'énergie au cours de la fabrication additive d'un objet, tout en obtenant un bain de fusion élargi, mais sans user prématurément la source d'énergie qui émet le faisceau d'énergie.

Il est à cet effet proposé, selon un premier aspect, un procédé de fabrication additive d'un objet à partir d'une couche de poudre, le procédé comprenant des étapes de :

- projection d'un faisceau d'énergie sur une surface de la couche de poudre en une tache de sorte à fusionner la poudre,
- balayage de la surface par le faisceau d'énergie, de sorte que la tache se déplace sur la surface selon un mouvement composé d'une translation dans une direction longitudinale de balayage et d'un mouvement oscillatoire ayant au moins une composante dans une direction d'oscillation,
- ajustement d'une focalisation du faisceau d'énergie au cours du balayage en fonction de la translation dans la direction longitudinale de balayage mais sans tenir compte de la composante du mouvement oscillatoire dans la direction d'oscillation.

Un focalisateur ajustant la focalisation du faisceau d'énergie en fonction des oscillations permet d'obtenir une taille de tache théoriquement invariante dans le temps. Toutefois, les inventeurs se sont aperçus qu'un focalisateur configuré de la sorte s'use très rapidement en raison de la haute fréquence des oscillations et de leur faible amplitude.

Par conséquent, ajuster la focalisation du faisceau d'énergie au cours du balayage sans tenir compte de la composante du mouvement oscillatoire dans la direction d'oscillation, comme dans le procédé selon le premier aspect, permet d'éviter une telle usure prématurée. Ajuster la focalisation du faisceau d'énergie en fonction de la translation dans la direction longitudinale permet néanmoins de limiter des fluctuations importantes de la taille de la tache causée par le mouvement de translation. Ainsi la quantité d'énergie déposée par unité de surface à l'aide du procédé selon le premier aspect varie dans des proportions qui restent acceptables.

Le procédé selon le premier aspect peut en outre comprendre les caractéristiques optionnelles suivantes, prises seules ou combinées entre elles lorsque cela est techniquement possible.

De préférence, le mouvement oscillatoire comprend une composante transversale dans une direction transversale de balayage perpendiculaire à la direction longitudinale de balayage, et la focalisation du faisceau d'énergie est ajustée sans tenir compte de la composante transversale du mouvement oscillatoire.

De préférence, la composante transversale du mouvement oscillatoire oscille à une fréquence d'au moins 1 kHz.

De préférence, la composante transversale du mouvement oscillatoire oscille sur une amplitude comprise entre 100 micromètres et 2 millimètres.

De préférence, le mouvement oscillatoire comprend une composante longitudinale dans la direction longitudinale de balayage, et la focalisation du faisceau d'énergie est ajustée sans tenir compte de la composante longitudinale du mouvement oscillatoire.

De préférence, la composante transversale du mouvement oscillatoire oscille à une fréquence d'au moins 1 kHz.

De préférence, la composante longitudinale du mouvement oscillatoire oscille à une amplitude comprise entre 100 micromètres et 2 millimètres.

De préférence, la trajectoire comprend une succession de boucles décalées les unes par rapport aux autres dans la direction longitudinale de balayage.

De préférence, la focalisation du faisceau est ajustée à l'aide de valeurs de paramètres de focalisation précalculées avant la projection du faisceau d'énergie, chaque valeur de paramètre de focalisation précalculée étant associée à une position de la tache sur la surface.

Il est également proposé, selon un deuxième aspect, un dispositif de fabrication additive d'un objet à partir d'une couche de poudre, le dispositif comprenant une source d'énergie comprenant une unité de commande configurée pour :

- projeter un faisceau d'énergie sur une surface de la couche de poudre en une tache de sorte à fusionner la poudre,
- commander un balayage de la surface par le faisceau d'énergie, de sorte que la tache se déplace sur la surface selon un mouvement composé d'une translation dans une direction longitudinale de balayage et d'un mouvement oscillatoire ayant au moins une composante dans une direction d'oscillation,
- ajuster une focalisation du faisceau d'énergie au cours du balayage en fonction de la translation dans la direction longitudinale de balayage mais sans tenir compte de la composante du mouvement oscillatoire dans la direction d'oscillation.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1, déjà discutée, représente de manière schématique la course dans une direction transversale d'un faisceau d'énergie oscillant et se projetant sur une surface.

La figure 2 est une vue schématique d'un dispositif de fabrication additive selon un mode de réalisation.

La figure 3 est un organigramme d'étapes d'un procédé de fabrication additive selon un mode de réalisation.

La figure 4 représente une trajectoire suivie par une tache résultant de la projection d'un faisceau d'énergie sur une surface au cours de la mise en œuvre du procédé auquel se rapporte la figure 3.

Sur l'ensemble des figures, les éléments similaires portent des références identiques.

## DESCRIPTION DETAILLEE DE L'INVENTION

### Dispositif de fabrication additive

En référence à la **figure 2,** un dispositif de fabrication additive comprend une source d'énergie 1 et un support 140.

Le support 140 présente une surface libre, typiquement plane, s'étendant dans deux directions : une direction longitudinale et une direction transversale perpendiculaire à la direction longitudinale. Dans la suite, on note par convention X la direction longitudinale, et Y la direction transversale.

La surface libre du support 140 a vocation à servir de surface de support 140 pour une couche 150 de poudre ou une pluralité de couche 150s empilées les unes sur les autres.

De manière générale, la source d'énergie 1 est adaptée pour projeter un faisceau d'énergie vers le support 140. Lorsqu'une couche 150 de poudre est déposée sur le support 140, ce faisceau d'énergie se projette sur une surface supérieure de cette couche 150 en une tache.

La source d'énergie 1 comprend notamment un générateur 110 configuré pour générer le faisceau d'énergie. Le générateur 110 est par exemple une source laser ; le faisceau généré est alors un faisceau laser comprenant des photons, autrement dit un faisceau lumineux. En variante, le générateur 110 est de type EBM (« Electron Beam Melting »), c'est-à-dire d'un type adapté pour générer un faisceau d'électrons. Dans la suite, on se placera dans le cas non limitatif d'un faisceau laser.

La source d'énergie 1 comprend en outre un focalisateur adapté pour ajuster une focalisation du faisceau lumineux. Ce focalisateur permet de faire ainsi varier la taille de la tache en laquelle le faisceau se projette sur la surface supérieure d'une couche 150 de poudre déposée sur le support 140.

Le focalisateur comprend par exemple un élément de focalisation 1102 et une lentille focalisatrice 1101 mobile par rapport à l'élément de focalisation en translation parallèlement à un axe optique de la lentille. La lentille focalisatrice 1101 est agencée en aval du générateur 110 de faisceau. Dans ce qui suit, les termes « amont » et « aval » se rapporteront implicitement à un sens de propagation du faisceau d'énergie sur un chemin optique allant du générateur 110 au support 140.

Le focalisateur comprend un actionneur pour déplacer la lentille focalisatrice 1101 par rapport à l'élément de focalisation 1102.

La source d'énergie 1 comprend par ailleurs un dispositif de balayage 130 adapté pour orienter le faisceau d'énergie afin que la tache où se projette ce faisceau soit mobile par rapport au support 140, sur la surface de la couche 150, dans la direction longitudinale et dans la direction transversale.

Le dispositif de balayage 130 est agencé en aval du dispositif de focalisation.

Le dispositif de balayage 130 comprend par exemple un premier miroir de balayage 131 mobile en rotation par rapport au support 140 autour d'un premier axe de rotation 133, et un deuxième miroir de balayage 132 mobile en rotation par rapport au support 140 autour d'un deuxième axe de rotation 134 différent du premier axe de rotation. L'un des deux miroirs de balayage 131, 132 est agencé en aval de l'autre miroir de balayage, de telle sorte qu'un faisceau d'énergie en provenance du générateur 110 se réfléchisse sur les deux miroirs de balayage séquentiellement, avant d'être redirigé vers le support 140.

En variante, le dispositif de balayage 130 comprend un unique miroir de balayage mobile en rotation par rapport au support 140, autour du premier axe de rotation 133 et autour du deuxième axe de rotation 134. Dans ce cas, cet unique miroir de balayage est agencé pour qu'un faisceau d'énergie en provenance du générateur 110 se réfléchisse sur ce miroir de balayage avant d'être redirigé vers le support 140.

Le dispositif de balayage 130 comprend par ailleurs au moins un actionneur (un par miroir de balayage utilisé). Chaque actionneur a pour fonction de déplacer un miroir de balayage en rotation autour d'au moins un axe de rotation et sur une plage d'angles de balayage.

Les plages d'angle de balayages sont par exemple adaptées pour permettre à la tache de couvrir toute la surface de la couche 150, tout du moins une majorité de celle-ci.

Pour une configuration donnée du dispositif de balayage, l'axe central d'un faisceau émanant du générateur 110 coupe la surface du support 140 en un point spécifique. Il existe ainsi une relation mathématique entre les coordonnées (x, y) de ce point et la position angulaire des miroirs de balayage 131, 132.

Le dispositif de balayage 130 est en particulier configuré pour susciter un mouvement composé de la tache projetée sur la surface de la couche 150 de poudre. Ce mouvement composé comprend une translation dans une direction longitudinale de balayage, dans un sens aller et dans un sens retour opposé au sens aller, et ce en alternance, la direction longitudinale de balayage étant choisie indépendamment des directions longitudinale et transversale du support 140.

Le mouvement composé comprend par ailleurs un mouvement oscillatoire de la tache dans au moins une direction d'oscillation, sur la surface d'une couche 150 de poudre déposée sur le support 140.

La source laser 110 et le dispositif de balayage 130 sont par exemple agencés de sorte à permettre un débit de fusion surfacique, c'est-à-dire la surface de la couche 150 de poudre couverte par le spot laser par unité de temps, supérieur à 1000 cm$^2$/min, par exemple supérieur à 2000 cm$^2$/min, par exemple supérieur à 4000 cm$^2$/min, par exemple inférieur à 15000 cm$^2$/min, par exemple inférieur à 10000 cm$^2$/min, par exemple de l'ordre de 6000 cm$^2$/min.

Le dispositif de balayage 130 est par exemple configuré pour permettre une vitesse de déplacement de la tache comprise entre 0,5 et 10 m/s, par exemple entre 1 et 5 m/s, par exemple égale à 1 ou 2 m/s.

La source d'énergie 1 comprend par ailleurs une unité de commande configurée pour commander le focalisateur et le dispositif de balayage 130 (non-illustrée). Cette unité de commande est configurée pour commander les actionneurs respectifs de ces différents dispositifs.

L'unité de commande peut comprendre ou être couplée à une mémoire mémorisant une table de valeurs de paramètres de focalisation précalculées pour différents couples de coordonnées (x, y) dans le plan de la surface libre du support 140. Ainsi, lorsque la tache est centrée en un point de coordonnées (x, y) de la surface du support, l'unité de commande est configurée pour commander le focalisateur à l'aide de la valeur de paramètre de focalisation associée à ce couple dans la table de valeurs précalculées.

## Procédé de fabrication additive

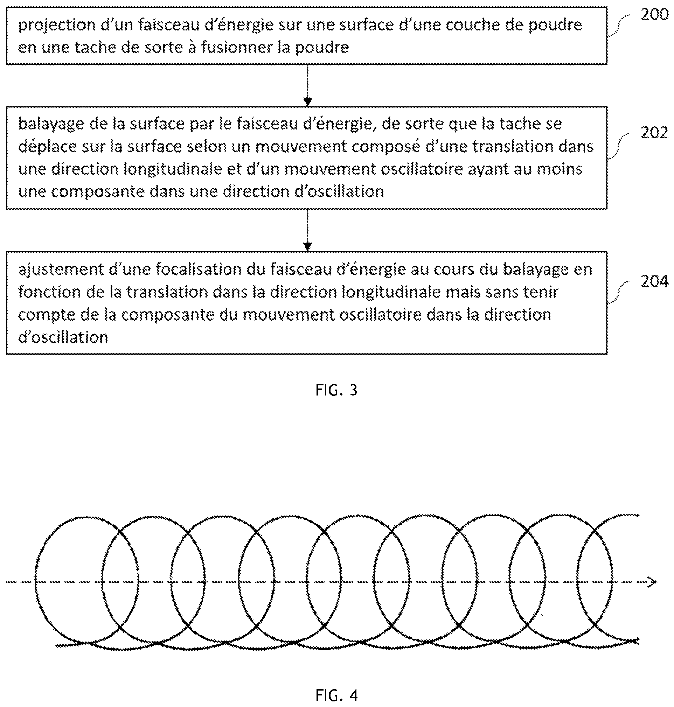

En référence à la **figure 3,** un procédé de fabrication additive utilisant le dispositif décrit ci-avant comprend les étapes suivantes.

Au moins une couche 150 de poudre est déposée sur le support 140, comme représenté en figure 1. La couche 150 de poudre présente une surface libre s'étendant dans une direction longitudinale du support et dans une direction transversale du support.

Les grains de poudre ont par exemple une granulométrie comprise entre 10 et 100 $\mu$m, par exemple entre 20 et 60 $\mu$m, par exemple égale à 40 $\mu$m.

Le matériau de la ou chaque couche 150 de poudre a par exemple une fluence comprise entre 0,5 et 10 J/mm$^2$, par exemple comprise entre 1 et 5 J/mm$^2$, par exemple égale à 2 J/mm$^2$.

Le matériau de la ou chaque couche 150 de poudre peut comprendre du titane et/ou de l'aluminium et/ou de l'inconel et ou de l'acier inoxydable et/ou de l'acier maraging. Le matériau de la ou chaque couche 150 de poudre peut être constitué de titane et/ou d'aluminium et/ou d'inconel et ou d'acier inoxydable et/ou d'acier maraging.

Le générateur 110 est activé, de manière à émettre un faisceau d'énergie. Ce faisceau d'énergie traverse le focalisateur et le dispositif de balayage 130 avant de se projeter sur la surface libre de la couche 150 de poudre en une tache (étape 200). La couche 150 de poudre chauffe alors au niveau de cette tache, au point de susciter une fusion de ses grains.

Le dispositif de balayage 130 oriente le faisceau de sorte que la tache se déplace en translation dans une direction longitudinale de balayage sur la surface (étape 202).

Au cours de l'étape 202, le dispositif de balayage 130 fait osciller le faisceau d'énergie, si bien que cette translation est modulée par un mouvement oscillatoire ; la tache se déplace alors selon le mouvement composé mentionné précédemment.

Le mouvement oscillatoire peut faire l'objet de différents modes de réalisation.

Dans un premier mode de réalisation, le mouvement oscillatoire est réalisé dans une direction transversale de balayage seulement, cette direction transversale de balayage étant perpendiculaire à la direction longitudinale de balayage. La trajectoire suivie par la tache est alors en zig-zag.

Dans un deuxième mode de réalisation, le mouvement oscillatoire comprend une composante d'oscillation transversale dans une direction transversale de balayage et une composante d'oscillation longitudinale dans la direction longitudinale de balayage, la direction transversale de balayage étant perpendiculaire à la direction longitudinale de balayage. En d'autres termes, ce mouvement oscillatoire engendre une oscillation de la tache sur la surface de la couche 150 de poudre non seulement dans la direction transversale de balayage, mais également dans la direction longitudinale de balayage.

La combinaison de ces deux composantes permet de définir un mouvement oscillatoire en deux dimensions, et ainsi définir une trajectoire de la tache comprenant une succession de motifs décalés les uns des autres dans la direction longitudinale de balayage, la forme de ces motifs dépendant de certains paramètres de ces deux composantes, notamment leur fréquence, leur amplitude et leur déphasage.

Par exemple, lorsque les deux composantes d'oscillation oscillent à la même fréquence, le mouvement oscillatoire peut être circulaire ou ellipsoïdal. En combinant ce mouvement circulaire ou ellipsoïdal à la translation suscitée par le dispositif de balayage 130, il est possible de faire en sorte que la tache suive sur la surface de la couche 150 une trajectoire comprenant une succession de boucles décalées les unes des autres dans la direction longitudinale, comme représenté en **figure 4.** Sur la figure 4, la flèche en pointillé représente le mouvement de translation suscité par le dispositif de balayage dans la direction longitudinale.

Le mouvement oscillatoire peut, en variante, avoir d'autres formes, par exemple celle d'un huit ou celle du symbole infini (c'est-à-dire un huit couché). La tache suit alors une trajectoire comprenant une succession de motifs plus complexes que des simples boucles.

Lorsque le mouvement oscillatoire a une composante transversale, cette composante transversale oscille de préférence à une fréquence d'au moins 1 kHz. Cette fréquence est typiquement comprise entre 1 kHz et 10 kHz lorsque le faisceau d'énergie est un faisceau laser, ou comprise entre 1 kHz et 100 kHz lorsque le faisceau d'énergie est un faisceau d'électrons. Par ailleurs, la composante transversale du mouvement oscillatoire peut osciller sur une amplitude comprise entre 100 micromètres et 2 millimètres.

Similairement, lorsque le mouvement oscillatoire a une composante longitudinale, cette composante longitudinale oscille de préférence à une fréquence d'au moins 1 kHz. Cette fréquence est typiquement comprise entre 1 kHz et 10 kHz lorsque le faisceau d'énergie est un faisceau laser, ou comprise entre 1 kHz et 100 kHz lorsque le faisceau d'énergie est un faisceau d'électrons. Par ailleurs, la composante transversale du mouvement oscillatoire peut osciller sur une amplitude comprise entre 100 micromètres et 2 millimètres.

Au cours du balayage, le focalisateur est sollicité pour ajuster la focalisation du faisceau d'énergie. Pour réaliser un tel ajustement, la lentille focalisatrice 1101 est déplacée en translation relativement à l'élément de focalisation 1102, ce qui a pour conséquence de déplacer le plan focal image du système optique formé par la source 1, par rapport à la surface de la couche de poudre 150.

L'ajustement de focalisation mis en œuvre par le focalisateur tient compte du balayage causé par le dispositif de balayage 130, lequel déplace la tache en translation dans la direction longitudinale. Les fluctuations de la taille de la tache causée par le balayage sont donc limitées par cet ajustement.

Plus précisément, la longueur de focalisation du faisceau ajustée par la focalisation varie en fonction de la position angulaire des miroirs de balayage du dispositif de balayage.

Comme indiqué précédemment, pour une configuration donnée du dispositif de balayage 130, l'axe central d'un faisceau d'énergie projeté par la source 1 coupe la surface du support 140 en un point spécifique de coordonnées (x, y). Il existe ainsi une relation mathématique entre les coordonnées (x, y) de ce point et la position angulaire des miroirs de balayage. En tenant compte de l'épaisseur moyenne de la couche 150 déposée sur le substrat, il est possible de calculer à l'avance les valeurs de paramètres utilisés par le focalisateur pour modifier la focalisation du faisceau au cours du balayage, et de les mémoriser dans la mémoire utilisée par l'unité de commande. Ainsi, l'unité de commande n'a pas besoin de procéder à des calculs pour commander le focalisateur.

En revanche, l'ajustement de focalisation mis en œuvre par le focalisateur ne tient pas compte des oscillations engendrées par le dispositif de balayage 130. Plus précisément, la longueur de focalisation du faisceau ne dépend pas de la position angulaire du faisceau dues aux oscillations.

En d'autres, terme, le focalisateur est configuré pour se comporter comme si les oscillations du faisceau étaient absentes.

Les étapes qui précèdent sont répétées sur plusieurs zones adjacentes de la surface dans la direction transversale de balayage. Ces zones sont balayées dans la direction longitudinale de balayage, mais selon un sens aller et un sens retour en alternance, afin d'accélérer le processus de balayage en deux dimensions de la surface de la couche de poudre 150.

Le procédé décrit précédemment peut faire l'objet d'autres variantes.

Premièrement, le faisceau d'énergie peut être mis en oscillation par d'autres types de dispositifs d'oscillation que le dispositif 120 décrit précédemment, et être focalisé par d'autres types de focalisateur que celui décrit précédemment. Le procédé qui précède est applicable à tout type de source d'énergie capable de modifier la focalisation d'un faisceau d'énergie se projetant sur une surface en une tache, et de déplacer cette tache selon un mouvement composé d'une translation et d'un mouvement oscillatoire sur cette surface, quelle que soit la structure interne de cette source, en particulier la structure permettant de générer les différentes composantes de ce mouvement composé.

Deuxièmement, dans le mode de réalisation de procédé présenté précédemment, qui est préféré, il n'est tenu compte d'aucune composante du mouvement oscillatoire pour ajuster la focalisation du faisceau d'énergie. Ceci présente l'avantage d'éviter une usure prématurée de la source et en particulier du focalisateur. En variante, lorsque le mouvement oscillatoire comprend deux composantes, une transversale et une longitudinale, il pourrait être envisagé que la focalisation du faisceau soit fonction de seulement une des deux composantes du mouvement oscillatoire. Certes, ceci use davantage la source, mais le contrôle de focalisation exercé sur le faisceau est plus précis.

Troisièmement, même si précalculer des valeurs des paramètres de focalisation est très avantageux pour éviter des charges de calcul élevées, il reste possible de calculer de telles valeurs à la volée au cours du balayage.

## Revendications

1. Procédé de fabrication additive d'un objet à partir d'une couche de poudre, le procédé comprenant des étapes de :

   • projection (200) d'un faisceau d'énergie sur une surface de la couche de poudre en une tache de sorte à fusionner la poudre,
   • balayage (202) de la surface par le faisceau d'énergie, de sorte que la tache se déplace sur la surface selon un mouvement composé d'une translation dans une direction longitudinale de balayage et d'un mouvement oscillatoire ayant au moins une composante dans une direction d'oscillation,
   - ajustement (204) d'une focalisation du faisceau d'énergie au cours du balayage en fonction de la translation dans la direction longitudinale de balayage mais sans tenir compte de la composante du mouvement oscillatoire dans la direction d'oscillation.

2. Procédé selon la revendication précédente, dans lequel le mouvement oscillatoire comprend une composante transversale dans une direction transversale de balayage perpendiculaire à la direction longitudinale de balayage, et dans lequel la focalisation du faisceau d'énergie est ajustée sans tenir compte de la composante transversale du mouvement oscillatoire.

3. Procédé selon la revendication précédente, dans lequel la composante transversale du mouvement oscillatoire oscille à une fréquence d'au moins 1 kHz.

4. Procédé selon l'une des revendications 2 et 3, dans lequel la composante transversale du mouvement oscillatoire oscille sur une amplitude comprise entre 100 micromètres et 2 millimètres.

5. Procédé selon l'une des revendications précédentes, dans lequel le mouvement oscillatoire comprend une composante longitudinale dans la direction longitudinale de balayage, et dans lequel la focalisation du faisceau d'énergie est ajustée sans tenir compte de la composante longitudinale du mouvement oscillatoire.

6. Procédé selon la revendication précédente, dans lequel la composante transversale du mouvement oscillatoire oscille à une fréquence d'au moins 1 kHz.

7. Procédé selon l'une des revendications 5 et 6, dans lequel la composante longitudinale du mouvement oscillatoire oscille à une amplitude comprise entre 100 micromètres et 2 millimètres.

8. Procédé selon l'une des revendications 1 à 3, dans lequel la trajectoire comprend une succession de boucles décalées les unes par rapport aux autres dans la direction longitudinale de balayage.

9. Procédé selon l'une des revendications précédentes, dans lequel la focalisation du faisceau est ajustée à l'aide de valeurs de paramètres de focalisation précalculées avant la projection du faisceau d'énergie, chaque valeur de paramètre de focalisation précalculée étant associée à une position de la tache sur la surface.

10. Dispositif de fabrication additive d'un objet à partir d'une couche de poudre, le dispositif comprenant une source d'énergie configurée pour projeter un faisceau d'énergie sur une surface de la couche de poudre en une tache de sorte à fusionner la poudre, la source d'énergie comprenant une unité de commande configurée pour :

    • commander un balayage de la surface par le faisceau d'énergie, de sorte que la tache se déplace sur la surface selon un mouvement composé d'une translation dans une direction longitudinale de balayage et d'un mouvement oscillatoire ayant au moins une composante dans une direction d'oscillation,
    • ajuster une focalisation du faisceau d'énergie au cours du balayage en fonction de la translation dans la direction longitudinale de balayage mais sans tenir compte de la composante du mouvement oscillatoire dans la direction d'oscillation.

**Patentansprüche**

1. Verfahren zum additiven Fertigen eines Objekts aus einer Pulverschicht, das Verfahren umfassend die Schritte zum:

    • Projizieren (200) eines Energiestrahls auf eine Oberfläche der Pulverschicht an einem Punkt, um das Pulver zu schmelzen,
    • Abtasten (202) der Oberfläche durch den Energiestrahl, sodass der Punkt sich auf der Oberfläche gemäß einer Bewegung, die aus einer Translation in einer Längsabtastrichtung gebildet ist, und einer oszillierenden Bewegung verschiebt, die mindestens eine Komponente in einer Oszillationsrichtung aufweist,
    - Einstellen (204) einer Fokussierung des Energiestrahls während des Abtastens abhängig von der Translation in der Längsabtastrichtung, jedoch ohne Berücksichtigung der Komponente der Schwingbewegung in der Schwingrichtung.

2. Verfahren nach dem vorstehenden Anspruch, wobei die Schwingbewegung eine Querkomponente in einer Querabtastrichtung senkrecht zu der Längsabtastrichtung umfasst und wobei die Fokussierung des Energiestrahls ohne Berücksichtigung der Querkomponente der Schwingbewegung eingestellt wird.

3. Verfahren nach dem vorstehenden Anspruch, wobei die Querkomponente der Schwingbewegung mit einer Frequenz von mindestens 1 kHz schwingt.

4. Verfahren nach einem der Ansprüche 2 und 3, wobei die Querkomponente der Schwingbewegung über eine Amplitude zwischen 100 Mikrometern und 2 Millimetern schwingt.

5. Verfahren nach einem der vorstehenden Ansprüche, wobei die Schwingbewegung eine Längskomponente in der Längsabtastrichtung umfasst und wobei die Fokussierung des Energiestrahls ohne Berücksichtigung der Längskomponente der Schwingbewegung eingestellt wird.

6. Verfahren nach dem vorstehenden Anspruch, wobei die Querkomponente der Schwingbewegung mit einer Frequenz von mindestens 1 kHz schwingt.

7. Verfahren nach einem der Ansprüche 5 und 6, wobei die Längskomponente der Schwingbewegung bei einer Amplitude zwischen 100 Mikrometern und 2 Millimetern schwingt.

8. Verfahren nach einem der Ansprüche 1 bis 3, wobei die Trajektorie eine Abfolge von Schleifen umfasst, die in der Längsabtastrichtung zueinander versetzt sind.

9. Verfahren nach einem der vorstehenden Ansprüche, wobei die Fokussierung des Strahls vor der Projektion des Energiestrahls mittels vorab berechneter Fokussierungsparameterwerte eingestellt wird, wobei jeder vorab berechnete Fokussierungsparameterwert einer Position des Punkts auf der Oberfläche zugeordnet ist.

10. Vorrichtung zum additiven Fertigen eines Objekts aus einer Pulverschicht, die Vorrichtung umfassend eine Energiequelle, die zum Projizieren eines Energiestrahls an einem Punkt auf einer Oberfläche der Pulverschicht konfiguriert ist, um das Pulver zu schmelzen, die Energiequelle umfassend eine Steuereinheit, die konfiguriert ist zum:

• Steuern einer Abtastung der Oberfläche durch den Energiestrahl, sodass der Punkt sich auf der Oberfläche gemäß einer Bewegung, die aus einer Translation in einer Längsabtastrichtung gebildet ist, und einer oszillierenden Bewegung verschiebt, die mindestens eine Komponente in einer Oszillationsrichtung aufweist,
• Einstellen einer Fokussierung des Energiestrahls während des Abtastens abhängig von der Translation in der Längsabtastrichtung, jedoch ohne Berücksichtigung der Komponente der Schwingbewegung in der Schwingrichtung.


**Claims**

1. Method for additively manufacturing an object from a powder layer, the method comprising the steps of:

• projecting (200) an energy beam onto a surface of the powder layer as a spot so as to fuse the powder,
• scanning (202) the surface by means of the energy beam, so that the spot moves over the surface with a motion consisting of a translation in a longitudinal scanning direction and of an oscillatory motion having at least one component in an oscillation direction,
- adjusting (204) a focus of the energy beam during scanning according to the translation in the longitudinal scanning direction, but without taking into account the component of the oscillatory motion in the oscillation direction.

2. Method according to the preceding claim, wherein the oscillatory motion comprises a transverse component in a transverse scanning direction perpendicular to the longitudinal scanning direction, and wherein the focus of the energy beam is adjusted without taking into account the transverse component of the oscillatory motion.

3. Method according to the preceding claim, wherein the transverse component of the oscillatory motion oscillates at a frequency of at least 1 kHz.

4. Method according to one of claims 2 and 3, wherein the transverse component of the oscillatory motion oscillates over an amplitude of between 100 micrometers and 2 millimeters.

5. Method according to any of the preceding claims, wherein the oscillatory motion comprises a longitudinal component in the longitudinal scanning direction, and wherein the focus of the energy beam is adjusted without taking into account the longitudinal component of the oscillatory motion.

6. Method according to the preceding claim, wherein the transverse component of the oscillatory motion oscillates at a frequency of at least 1 kHz.

7. Method according to one of claims 5 and 6, wherein the longitudinal component of the oscillatory motion oscillates at an amplitude of between 100 micrometers and 2 millimeters.

8. Method according to any of claims 1 to 3, wherein the trajectory comprises a succession of loops offset from one another in the longitudinal scanning direction.

9. Method according to any of the preceding claims, wherein the beam focus is adjusted using focus parameter values precalculated before the energy beam is projected, each precalculated focus parameter value being associated with a position of the spot on the surface.

10. Device for additively manufacturing an object from a powder layer, the device comprising an energy source configured to project a beam of energy onto a surface of the powder layer as a spot so as to fuse the powder, the energy source comprising a control unit configured to:

• control a scanning of the surface by means of the energy beam, so that the spot moves over the surface with a motion consisting of a translation in a longitudinal scanning direction and of an oscillatory motion having at least one component in an oscillation direction,
• adjust the focus of the energy beam during scanning according to the translation in the longitudinal scanning direction, but without taking into account the component of the oscillatory motion in the oscillation direction.

FIG. 1

FIG. 2

projection d'un faisceau d'énergie sur une surface d'une couche de poudre en une tache de sorte à fusionner la poudre — 200

balayage de la surface par le faisceau d'énergie, de sorte que la tache se déplace sur la surface selon un mouvement composé d'une translation dans une direction longitudinale et d'un mouvement oscillatoire ayant au moins une composante dans une direction d'oscillation — 202

ajustement d'une focalisation du faisceau d'énergie au cours du balayage en fonction de la translation dans la direction longitudinale mais sans tenir compte de la composante du mouvement oscillatoire dans la direction d'oscillation — 204

FIG. 3

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018345413 A1

- DE 10112591 A1